# EUROPEAN PATENT SPECIFICATION

(11) **EP 2 121 303 B1**
(45) Date of publication and mention of the grant of the patent: **14.07.2010**
(21) Application number: 07706238.8
(22) Date of filing: 19.01.2007
(51) Int. Cl.: B32B 7/12, B32B 27/08, B60J 10/00, B29C 45/14

(54) **MULTI-LAYERED FILM AND FLOCKED MATERIAL COMPRISING SUCH A FILM**
MEHRLAGIGE FOLIE UND SOLCH EINE FOLIE UMFASSENDES GEFLOCKTES MATERIAL
FILM MULTICOUCHE ET MATÉRIAU FLOQUÉ COMPRENANT UN TEL FILM

(43) Date of publication of application: 25.11.2009
(73) Proprietor: Dimontonate Floccati S.p.A., 21020 Montonate di Mornago VA (IT)
(72) Inventor: ROSA, Federico, I-21100 Varese (IT); CAPELLINI, Ciro, I-27029 Vigevano (IT)
(74) Representative: Perani, Aurelio
(86) International application number: PCT/IT2007/000039
(87) International publication number: WO 2008/087672

(56) References cited:
- EP-A- 1 072 712
- EP-A- 1 445 137
- EP-A1- 0 380 385
- US-A- 5 489 461

## Description

The present invention relates to a flocked multi-layered film having improved workability. Particularly, the invention relates to a process for making flocked materials, particularly for obtaining closed linear profiles for use in automotive applications.

According to the present invention, by the term "flocked material" is meant a composite material having at least one flock layer at at least one outer surface.

By the term "profile" is meant a flocked material having a particular shape, which can act as a seal, a window channel and/or a window scraper in automotive applications.

It is known from European Patent no. EP 1072712 by the same Applicant, that a multi-layered film comprising one or more layers of thermoadhesive material, one layer of primer, one layer of adhesive and one layer of flock, may be coextruded with or coupled to an elastomeric material, preferably thermoplastic rubber, to form a window scraping profile for vehicle windows. The technical problem faced by such a prior application has been to achieve very high flock adhesion values, being the profile required to withstand wear and rubbing caused by the window-glass in sliding motion.

According to the prior art and as described in the above application, the adhesion of the multi-layered film to rubber on the side opposite the flocked side, is guaranteed by the use of a primer layer which increases the wettability of the layer of thermoadhesive material, thereby increasing the anchorage to the thermoplastic rubber. Said adhesion generally occurs at temperatures of about 80°C to about 185°C in processes of subsequent coupling of the multi-layered film and the rubber.

In fact EPA1445137 discloses a Sealing profile for a motor vehicle, comprising a layer of a thermoadhesive material, a layer of a copolymer selected from polyamide,polyester and polyurethane an adhesive layer and flock material, wherein the thermoadhesive layer is bonded to a thermoplastic elastomer substrate after extrusion.

Therefore, according to the prior art, the final profiles designed for use as a vehicle window frame are generally cut to the required lengths and subsequently joined at their ends to obtain a profile having length suitable for the vehicle window perimeter.

It has been seen that the area at the jointing of the two profile ends, which is usually obtained by welding, results to be lacking in flocked material. In fact, the temperatures involved in said jointing, which are of the order of 200-220°C, cause the sinking and embedding of the flock in the underlying adhesive layer, therefore the final profile at the jointing area results to be lacking in flock.

Alternatively in prior art, the joining of the two ends of a profile is carried out by placing said ends into a mold and injecting therein thermoplastic rubber, as connecting material. Even in this way, a lacking in flock area of the surface of the final closed profile is provided corresponding to the area respective to the joining thermoplastic rubber.

Both in the case of joining by welding and in the case of joining by means of injected thermoplastic rubber, the area lacking in flock, besides to be aesthetically undesired, is mainly undesired from a technical point of view, having the flock a specific function when contacting a sliding window.

The prior art remedies this problem by manually spreading an adhesive layer on the above-cited area of the closed profile and then by again manually strewing flock thereon.

The drawbacks related to such a practice are evidently the poor reproducibility closely associated to manual processing besides the increasing in production times of the final profile, being the increasing due to the times required for profile finishing. Furthermore, the finishing steps require the necessary involvement of an operator, who directly contacts materials, such as adhesives, whose fumes have been referred to be capable to cause health problems.

Hence, the problem arises to manufacture materials, particularly profiles, which are evenly flocked, regardless of their shape and geometry, while still maintaining high performances in terms of flock adhesion and flexibility of the finished flocked material.

Therefore, an object of the present invention is to provide evenly flocked materials having high technical performances.

Further, an object of the invention is to provide a process for making such flocked materials, which has low impact on the operators of the field.

The above objects have been achieved by a process as defined in claim 24, which utilizes a flocked multi-layered film as defined in claim 1. Further advantages and preferred embodiments of the invention are as set out in the dependent claims.

The multi-layered film of the present invention comprises at least one layer of thermoadhesive material, one layer of a first adhesive, one layer of a second adhesive and one layer of flock, being further provided between the two adhesives one layer of a thermoplastic polycondensation polymer selected from the group consisting of polyamide, polyester and polyurethane, said thermoplastic polymer having a melting point of at least 200°C.

Further features and advantages of the invention will result from the following detailed description made with reference to the illustrative and nonlimiting examples of carrying out the invention, and to the annexed figures wherein:
- figure 1 is a sectional view of a multi-layered film according to the invention;
- figure 2 is a sectional view of a profile according to the invention, comprising the multi-layered film of figure 1;
- figure 3 is a cutting of the multi-layered film of figure 1;
- figure 4 is a top view of the junction area of a closed essentially linear profile according to the invention, comprising the cutting of figure 3;
- figure 5 is a top view of a mold for making the closed essentially linear profile of figure 3.

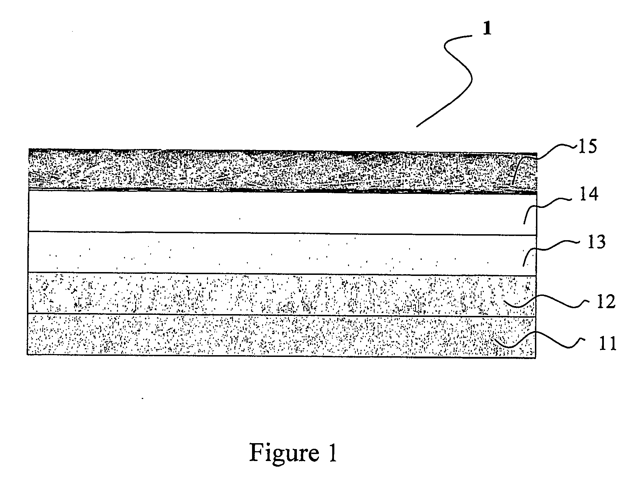

Therefore, referring to figure 1, the invention relates to a multi-layered film 1 comprising:
- at least one layer 11 of thermoadhesive material,
- one layer 12 of a first adhesive;
- one layer 14 of a second adhesive and
- one layer 15 of flock,
characterized in that, between said layer 12 of first adhesive and said layer 14 of second adhesive, one layer 13 of a thermoplastic polycondensation polymer is provided selected from the group consisting of polyamide, polyester and polyurethane, said thermoplastic polymer having a melting point of at least 200°C.

Preferably, said layer 13 of thermoplastic polycondensation polymer is made of polyamide. More preferably, said polyamide is nylon 6.

Preferably, said layer 13 of thermoplastic polycondensation polymer has a thickness of at least 10 µm; more preferably, said thickness is about 20 µm.

By the term "at least one layer 11 of thermoadhesive material" is meant one or more identical or different layers of flexible thermoadhesive material. Preferably, for each layer, such thermoadhesive material is selected from the group consisting of thermoadhesive polypropylene, polyethylene, polypropylene copolymers, polyethylene copolymers, ethylene-propylene copolymers, polyurethane, polyester, copolyesters or mixtures thereof. More preferably, for each layer, such a thermoadhesive material is a polypropylene copolymer. Even more preferably, the multi-layered film 1 according to the invention comprises a single layer of thermoadhesive material, which is made of polypropylene-ethylene copolymer.

Concerning the layer 12 of a first adhesive according to the present invention, said first adhesive is a polyolefin adhesive. Preferably, it is a soft ethylene-propylene copolymer.

Concerning the layer 14 of a second adhesive, such an adhesive layer is preferably made of a polyurethane adhesive; more preferably it is an adhesive obtained by reacting a polyurethane having hydroxyl end groups and a polyfunctional isocyanate and by producing further reactions to form of allophanate and biuret groups together with urethane groups.

The layer 15 of flock is preferably made of polyester or polyamide, whose fibers have lengths in a range from 0.5 to 2 mm. Even more preferably, the flock is polyester, whose fibers have a length of about 0.6 mm. The layer 15 of the multi-layered film according to the invention shows a value of adhesion on the layer 14 of a second adhesive of at least 15 N/cm. Preferably, the value of adhesion is about 20 N/cm. Even more preferably, the value of adhesion is at least 30 N/cm.

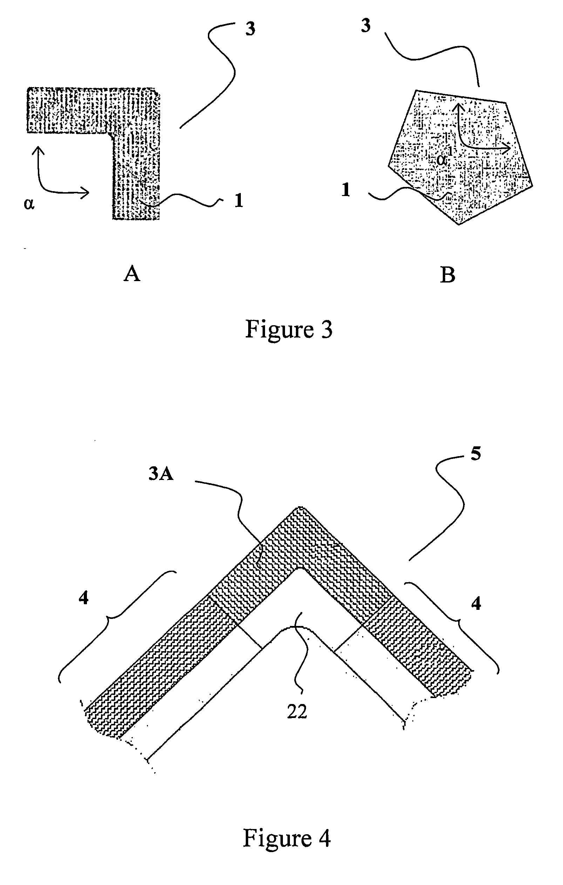

In another aspect, the invention relates to a cutting of flocked material having suitable sizes as defined in claim 10. Referring to figure 3, the shape of the cutting 3 of multi-layered film 1 according to the invention conveniently preferably is a "v" shape, as shown in figure 3A. The angle at the apex of the "v" shape is therefore defined as α. The size of the angle α depends on the type of application for which the final closed essentially linear profile 5 is intended. Alternatively, as shown in figure 3B, the cutting has pentagonal shape or triangular shape or quadrangular shape. In the preferred embodiment, as shown in figure 3A, the cutting of the multi-layered film 1 according to the invention has essentially substantially a "v" shaped, wherein the size of the angle α is in the range 70° to 140°, more preferably about 90°. Alternatively, as shown in figure 3B, such a cutting preferably has a pentagonal shape, wherein an angle of the pentagon is defined as α¹ and such an angle α¹ is in the range 70° to 140°, more preferably about 90°, or has the shape of an essentially isosceles triangle, or the shape of an essentially isosceles trapezium.

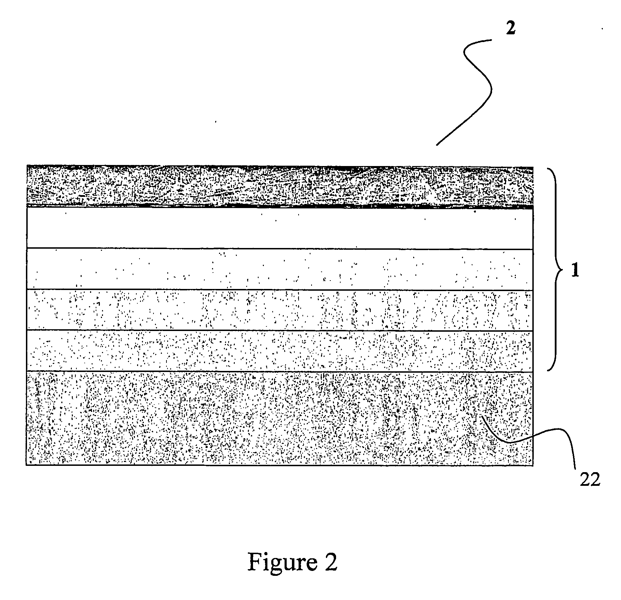

Referring to figure 2, the invention relates to a flocked material 2 comprising one layer 22 of thermoplastic elastomer which is at least partly coated by at least one multi-layered film 1 as above described, as claimed in claim 19.

Thermoplastic elastomers are polymer compounds that have typical rubber properties, i.e. softness, elastic memory and flexibility, can be obtained even without curing, and can be reprocessed by melting like any thermoplastic material.

Thermoplastic elastomers suitable for the present invention consist of a polyolefin matrix wherein a dynamically cured elastomeric ethylene-propylene-diene monomer (EPDM) phase is closely dispersed, being such a product commercially available under the name of forprene^{®}, santoprene^{®} or vegaprene^{®} or sarlink^{®} or enflex^{®}/V or excelink^{®}. Alternatively, thermoplastic elastomers according to the invention are selected from styrene-butadiene-styrene (SBS) block thermoplastic elastomers, being such a product commercially available, for instance, under the name of sofprene^{®}; from a styrene-ethylene/butylene-styrene (SEBS) copolymer, being such a product commercially available under the name of Megol^{®}; from SEBS and polyolefin-based thermoplastic elastomers, being such a product for instance commercially available under the name of Laprene^{®}.

Preferably, the flocked material 2 according to the invention is a profile, i.e. a flocked material for use in automotive applications such as a window scraper, a seal and/or a window channel, having an open essentially linear shape or a closed essentially linear shape.

By the term "profile having an open essentially linear shape" or "open essentially linear profile" is meant a profile having two separate ends, which extends lengthwise, while keeping a section area and a section geometry thereof essentially constant throughout all said length. By the term "profile having a closed essentially linear shape" or "closed essentially linear profile" is meant an endless closed profile, which extends lengthwise, while keeping a section area and a section geometry thereof essentially constant throughout all said length.

According to the present invention, such an open essentially linear profile 4 and such a closed essentially linear profile 5 each one comprises one layer 22 of a thermoplastic elastomer, having at least one multi-layered film 1 thereon.

In another aspect, the present invention relates to a process for making a multi-layered film 1 as above described, comprising the steps of:
a) coextruding at least one layer 11 of thermoadhesive material, one layer 12 of a first adhesive and one layer 13 of a thermoplastic condensation polymer selected from the group consisting of polyamide, polyester and polyurethane, said thermoplastic condensation polymer having a melting point of at least 200°C;
b) subjecting the layer 13 of thermoplastic condensation polymer so coextruded to a surface activation treatment;
c) coating the layer 13 of thermoplastic condensation polymer activated in step b) with one layer 14 of a second adhesive;
d) coating said layer 14 of a second adhesive with one layer 15 of flock;
e) heating the film obtained from step d) to temperatures of 70 to 150°C; and
f) cooling the multi-layered film heated in step e).

Particularly, step a) provides the coextrusion of three materials, i.e. the extrusion of one layer 11 of thermoadhesive material, one layer 12 of a first adhesive and one layer 13 of thermoplastic condensation polymer through a single cast extrusion die, using a corresponding number of conveyors so that the extruded co-flow and join into a single laminar structure. Preferably, such a laminar structure has a thickness of 70 to 200 µm, even more preferably of about 100 µm. Preferably, said thermoplastic condensation polymer is polyamide.

In step b), the layer 13 of thermoplastic condensation polymer so coextruded is subjected to a surface activation treatment until achieving a surface tension of preferably at least 40 × 10⁻⁴ N/cm², more preferably 42 to 44 × 10⁻⁴ N/cm². Even more preferably, such a surface activation treatment is a corona treatment.

In step c), the coating with one layer 14 of a second adhesive is carried out. Preferably, such a second adhesive is a polyurethane adhesive; more preferably, it is an adhesive obtained by reacting a polyurethane having hydroxyl end groups and a polyfunctional isocyanate and by producing further reactions to form of allophanate and biuret groups together with urethane groups. More preferably, such a step c) is carried out by coating with a layer made of an adhesive having a composition comprising polyurethane, dimethylformamide and a trimethylol propane/toluene diisocyanate adduct.

The step d) consists in coating said layer 14 of a second adhesive with a layer 15 of flock. Preferably, step d) is carried out by coating in electrostatic field by applying a voltage of 35,000 to 60,000 Volts and a current of 0.3 to 0.5 milliamperes. More preferably, by applying a voltage of about 40,000 Volts and a current of about 0.4 milliamperes.

In step e), the flocked multi-layered film 1 obtained in step d) is subjected to reheating to temperatures of 70°C to 150°C. Such a reheating can be carried out in suitable devices, such as ovens having suitable sizes. Preferably, reheating is carried out of 80°C to 135°C for 5 to 15 minutes.

At the end of step f), wherein the multi-layered film 1 is cooled to room temperature, i.e. to a temperature of 15°C to 30°C, the flocked multi-layered film 1 according to the invention has a value of flock layer adhesion of at least 15 N/cm, preferably of at least 20 N/cm, more preferably of at least 30 N/cm.

Therefore, the multi-layered film 1 obtained according to the invention can be appropriately cut into a suitable shape to be housed into a mold for preparing flocked materials of desired sizes and shapes. Advantageously, the multi-layered film 1 according to the invention can be cut into a strip shape for preparing open or closed essentially linear profiles.

Therefore, in a further aspect, the invention concerns a process for making a flocked material 2, comprising the steps of:
i) placing at least one multi-layered film 1 of the invention into a mold 6, so that the flocked surface of said at least one film 1 faces the inner wall of the mold 6;
ii) injecting a thermoplastic elastomer into the mold 6 at temperatures of 170°C to 220°C, so that said thermoplastic elastomer flows onto the surface of the layer 11 of thermoadhesive material of the multi-layered film 1;
iii) cooling the flocked material 2 so obtained.

The step i) of such a process provides that at least one multi-layered film 1 is placed into a mold 6, so that its flocked surface faces the inner wall of the mold. Specifically, the multi-layered film 1 is in the mold with its flocked side down, so that the thermoadhesive material side is exposed.

In step ii), thermoplastic elastomer is injected into the mold 6 at temperatures of 170°C to 220°C, so that said elastomer flows into the mold and contacts the surface of the layer 11 of thermoadhesive material of the multi-layered film 1, thereby firmly adhering thereto. In fact, the high temperature of injected thermoplastic elastomer acts on the properties of the thermoadhesive material thus activating it and, in this way, promoting the adhesion thereof to the elastomer. Preferably, the injection temperature of step ii) is of 175 to 220°C for a few tenths of seconds at a pressure of 9 × 10⁷ Pa to 4 × 10⁷ Pa. More preferably, the injection temperature of step ii) is of 180 to 200°C for 25 to 35 seconds at a pressure of about 8 × 10⁷ Pa.

Finally, in step iii), the flocked material 2 so obtained is cooled to facilitate the removal thereof from the mold 6.

According to a first advantageous embodiment of the invention, the flocked material 2 is in the form of an open essentially linear profile 4, wherein the open essentially linear shape is determined by an essentially linear mold of suitable length.

According to a second advantageous embodiment of the invention, the flocked material 2 is in the form of a closed essentially linear profile 5, whose shape is determined by a closed essentially linear mold.

Certainly, according to the invention flocked materials 2 of different sizes can be obtained by using a mold suitable for imparting the desired sizes.

In another aspect, the invention relates to a process for making an open essentially linear profile 4 as set out in claim 35, which comprises the steps of:
A) placing at least one multi-layered film 1 having a shape of strip into a mold 6 having a housing suitable for forming a linear profile, which is at least as long as said strip, so that the flocked surface of said at least one film 1 faces the inner wall of the mold 6;
B) injecting a thermoplastic elastomer into the mold 6 at temperatures of 170°C to 220°C, so that said thermoplastic elastomer flows onto the surface of the layer 11 of thermoadhesive material of the multi-layered film 1 of the strip;
C) cooling the open essentially linear profile 4 so obtained to room temperature.

In yet another aspect, the invention relates to a process for making a closed essentially linear profile 5 as set out in claim 36, by using a cutting 3, 3A, 3B of the multi-layered film 1 according to the invention and a profile 4 having an open essentially linear shape. Such an open essentially linear profile 4 can be a profile formed either according to prior art or according to the present invention.

Therefore, referring to figures 3 to 5, the invention concerns a process for making a closed essentially linear profile 5, comprising the steps of:
I) providing an open essentially linear profile 4;
II) providing a cutting 3, 3A, 3B of the multi-layered film 1 according to the invention;
III) placing the cutting 3, 3A, 3B of step II) into a mold 6, so that the flocked surface of said cutting faces the inner wall of the mold 6;
IV) placing the ends of the profile 4 of step I) into the same mold 6 of step III), so that the flocked surface of said profile ends faces the inner wall of the mold 6, and so that said ends are in close proximity to the cutting 3, 3A, 3B;
V) injecting a thermoplastic elastomer into the mold 6 at temperatures of 170°C to 220°C, so that said elastomer flows onto the surface of the layer 11 of thermoadhesive material of the cutting 3, 3A, 3B, said thermoplastic elastomer at the same time contacting the ends of the profile 4 of step II);
VI) cooling the closed essentially linear profile 5 so obtained.

In step I), an essentially linear profile 4 is provided, which can be obtained either according to the invention or according to prior art. In this process for making the closed essentially linear profile 5, while the cutting 3, 3A, 3B of figure 3 has the multi-layered structure according to the invention, the open essentially linear profile 4 can comprise a multi-layered film 1 according to the invention or have a prior art multi-layered structure.

In step II), a cutting 3, 3A, 3B is provided, whose geometrical shape has two sides advantageously oriented in such a manner as to join the ends of the open essentially linear profile 4. As described above, in a preferred embodiment and as shown in figure 3A, the cutting according to the invention is essentially substantially "v" shaped, wherein the angle a is in the range of 70° to 140°, more preferably about 90°. Alternatively, as shown in figure 3B, such a cutting preferably has a pentagonal shape, wherein the angle α¹ is in the range of 70° to 140°, more preferably about 90°, or it has the shape of an essentially isosceles triangle or an essentially isosceles trapezium.

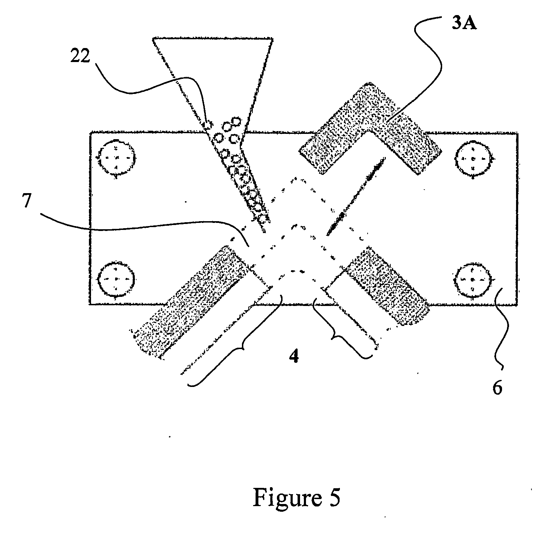

In step III), as shown in figure 5, the cutting 3, 3A, 3B is placed into a mold 6 so that the flocked surface of said cutting faces the inner wall of the mold 6. The mold 6 preferably has a housing 7 whose shape is suitable for housing the cutting. In the preferred embodiment as shown in figure 5, a "v" shaped cutting 3A is used.

In step IV), the ends of the profile 4 of step I) are placed into the same mold 6 of step III), so that the flocked surface of said ends of the profile 4 faces the inner wall of the mold 6, and so that each of said ends is in close proximity to the cutting without overlapping it. By the term "close proximity" with reference to the distance between each of the ends of the essentially linear profile 4 and the cutting 3, 3A, 3B, is meant a maximum distance of 0.1 mm. Preferably, each end is at a distance of 0.01 mm to 0.1 mm from a side of the cutting.

In step IV), the ends of the open essentially linear profile 4 according to the invention or the prior art, are placed into the mold 6, by being inserted in suitable guides within the mold, not shown in figure 5, for a length of 50 to 150 mm.

If the open essentially linear profile 4 is an open essentially linear profile made according to prior art, the guides within the mold 6 are suitably cooled to prevent the temperatures applied to the mold from causing, as mentioned in the discussion of the prior art, the flock to sink and be embedded in the underlying adhesive layer.

If the open essentially linear profile 4 is an open essentially linear profile made according to the present invention, there is advantageously no need to provide a cooling system for the guides of the mold 6.

In step V), as shown in figure 5, a thermoplastic elastomer is injected into the mold 6 at temperatures from 170°C to 220°C, so that said elastomer flows onto the surface of the layer 11 of thermoadhesive material of the multi-layered film 1 of the cutting 3, 3A, 3B in the housing 7, said thermoplastic elastomer also contacting the ends of the open essentially linear profile 4. Preferably these temperatures are of 180°C to 200°C.

After the cooling step VI) and as shown in figure 4, a closed essentially linear profile 5 is obtained, wherein the cutting and the open essentially linear profile 4 are firmly adhered to the thermoplastic elastomer. In this way, the closed linear profile 5 will have a continuous layer 15 of flock throughout its length.

Figure 4 particularly shows the jointing area of the closed essentially linear profile 5 obtained according to the invention. As shown in both figure 4 and figure 5, the two sides of the cutting 3A, which are in close proximity to the ends of the open essentially linear profile 4 are preferably as wide as the multi-layered film 1 of such an open essentially linear profile 4.

The invention will be now described in detail with reference to illustrative and non limiting examples of manufacturing of the multi-layered film and profile according to the invention, as well as tests on the improved technical features thereof.

### EXAMPLE 1

### Process for making a multi-layered film

The following three materials were flat-head coextruded in the following order:
- thermoplastic polycondensation polymer: nylon 6 (melting point = 220°C);
- first adhesive: grafted polypropylene;
- thermoadhesive material: polypropylene-ethylene copolymer.

A laminar structure was thus obtained having an overall thickness of 100 µm and a width of 1400 mm.

The laminar structure so coextruded was loaded onto a roll-holding device of a flocking apparatus, with the polyamide layer facing upward and was fed, at the speed of 5 meters/minute, through a corona treatment apparatus. A corona treatment was carried out on the surface of the polyamide layer, until achieving a surface tension of 42 × 10⁻⁴ N/cm². Subsequently, the activated polyamide layer were coated with 180 g/m² of a solution of a second adhesive, being such a solution so composed: 100 parts of polyurethane in dimethylformamide (commercially available as Larithane^{®}); 10 parts of a solution of 75% of a trimethylol propane/toluene diisocyanate adduct in ethyl acetate; 10 parts of dimethylformamide.

This layer of second adhesive was then coated with 102 g/m² polyester flock (3.3 DTEX, 0.6 mm fiber length), while setting a voltage of 40,000 Volts and a current of 0.4 milliamperes.

The laminar structure so flocked was then passed in an oven at increasing temperatures of 60°C to 135°C, respectively of 60°C, then 100-115-130°C and finally 135°C over a total time of 7 minutes.

The laminar structure exiting the oven was then cooled to room temperature (about 20°C).

After cooling, the flocked multi-layered film according to the invention was then obtained. Such a film showed a flocked material adhesion value of 18 N/cm according to the rule FIAT 7 - M9000.

### EXAMPLE 2

### Process for making an open linear profile according to the invention

A 15 mm × 1.5 m strip was cut from the film obtained in Example 1, and such a strip was introduced into an mold for injection molding, with the flocked side facing the wall of the mold. Said mold had a housing suitable for forming a linear profile, which housing was as long as the strip and 25 mm wide.

The mold was mounted on an injection press for injection of a thermoplastic elastomer known as forprene^{®} according to the following cycle:

| | |
|---|---|
| injection temperatures | 200-190-180°C |
| injection time | 32 s |
| pressure | 8 × 10⁷ Pa |
| cooling time | 20 s |

After cooling, a linear profile was removed from the mold, being said profile consisted of the multi-layered film strip of the invention firmly adhered to the thermoplastic elastomer known as forprene^{®}.

### EXAMPLE 3

### Process for making a closed linear profile according to the invention

Example 2 was repeated by using the same materials under the same conditions and with the same sizes (strip width = 15 mm; profile width = 25 mm), but by using a different mold. In this case, the mold was suitable for forming a closed window channel profile having a trapezoidal shape having a perimeter of 1.6 m.

A closed linear profile was thus obtained.

### EXAMPLE 4

### Process for making a closed linear profile according to the invention

A "v" shaped cutting was cut from the film obtained in Example 1, as shown in figure 3, wherein their equal sides were 15 mm long and its angle α was 90°. This cutting was introduced into a mold for injection molding, as shown in figure 5, with the flocked side facing the wall of the mold.

Together with such a "v" shaped cutting, the ends of a open linear profile of the prior art were inserted into the mold, i.e. an open linear window channel profile obtained by subsequent coupling of a multi-layered film strip (15 mm × 1.5 m) and the elastomer (25 mm × 1.5 m) according to the teaching of the abovementioned European patent application no. 00202626.8. Said ends were drawn up to the two sides of the cutting at a distance of 0.1 mm, as shown in figures 4 and 5.

The ends were inserted through special guides into the mold for a length of 75 mm. The mold was mounted on an injection press for injection of a thermoplastic elastomer known as forprene^{®} according to the following cycle:

| | |
|---|---|
| injection temperatures | 200-190-180°C |
| injection time | 32 s |
| pressure | 8 × 10⁷ Pa |
| cooling time | 20 s |

After cooling, a closed linear profile as shown in figure 4 was removed from the mold, being said profile consisted of the multi-layered film strip of the invention and a cutting of the same film, both firmly adhered to the thermoplastic elastomer, both at the same time coating the latter throughout the whole length of the closed profile.

From the above examples and the detailed description are evident the surprising results achieved by the flocked multi-layered film according to the invention, wherein the selection of a thermoplastic condensation polymer having a melting point of at least 200°C allows to obtain an extremely advantageous film in terms of performance improvement. In fact, since the film comprising the thermoplastic polymer of the invention is capable to keep itself unaltered at temperatures higher than 200°C, an evenly flocked profile has been obtained by an injection molding process, without the flock sinking and being embedded in the adhesive as a result of the high temperatures applied. Particularly, the use of the multi-layered film allows to make an evenly flocked closed profil, even advantageously from the prior art profiles, without the drawbacks of the prior art. Furthermore, the process for obtaining flocked materials by using the multi-layered film is conveniently quick, highly reproducible, as well as of low impact on humans and environment, because no primers are used for making the final profile and no further adhesives are required for flocking the jointing area thereof.

The closed profile of the invention has extremely advantageous features inasmuch as, besides being evenly flocked, flexible and non-deformable, it shows high values of flock adhesion to the profile.

The multi-layered film of the present invention may be used in making flocked products that comprise it, regardless of the shape and geometry of such a final flocked products, since it is sufficient to simply provide a mold suitable for imparting the desired shape, without departure from the scope of this patent. Therefore, both the multi-layered films and the evenly flocked products according to the invention can be advantageously addressed to various technical fields, even finding an advantageous use in the automotive field.

## Claims

1. A multi-layered film (1) comprising:
- at least one layer (11) of thermoadhesive material,
- one layer (12) of a first adhesive;
- one layer (14) of a second adhesive and
- one layer (15) of flock,
**characterized in that** between said layer (12) of a first adhesive and said layer (14) of a second adhesive, one layer (13) of a thermoplastic polycondensation polymer is provided selected from the group consisting of polyamide, polyester and polyurethane, said thermoplastic polymer having a melting point of at least 200°C.

2. The film (1) according to claim 1, wherein said thermoplastic polycondensation polymer is polyamide.

3. The film (1) according to claim 1 or 2, wherein the thickness of the layer (13) of thermoplastic polycondensation polymer is at least 10 µm.

4. The film (1) according to any one of claims 1-3, wherein the value of adhesion of the layer (15) of flock to the layer (14) of a second adhesive is at least 15 N/cm.

5. The film (1) according to any one of claims 1-4, wherein said layer (12) of a first adhesive is selected from the group consisting of a polyolefin adhesive, a polyurethane adhesive.

6. The film (1) according to any one of claims 1-5, wherein the layer (15) of flock is made of polyester or polyamide.

7. The film (1) according to any one of claims 1-6, wherein said layer (11) of thermoadhesive material is made of a thermoadhesive material selected from the group consisting of polypropylene, polyethylene, polypropylene copolymers, polyethylene copolymers, ethylene-propylene copolymers, polyurethane, polyester, and mixtures thereof.

8. The film (1) according to any one of claims 1-7, wherein the multi-layered film (1) comprises a single layer (11) of thermoadhesive material.

9. The film (1) according to any one of claims 1-8, wherein the multi-layered film (1) is strip shaped.

10. A cutting (3, 3A, 3B) of the multi-layered film (1) according to any one of claims 1-9.

11. The cutting (3, 3A, 3B) according to claim 10, wherein said cutting (3, 3A, 3B) is "v" shaped or pentagonal or triangular or quadrangular.

12. The cutting (3, 3A) according to claim 11, wherein said cutting (3, 3A) is "v" shaped, wherein the angle α at the apex of said "v" is in the range of 70° to 140°, preferably 90°.

13. The cutting (3, 3B) according to claim 11, wherein said cutting (3, 3B) has a pentagonal shape, wherein an angle of said pentagon is named α¹ and is in the range of 70° to 140°, preferably 90°.

14. A flocked material (2) comprising one layer (22) of thermoplastic elastomer at least partly coated with at least one multi-layered film (1) according to any one of claims 1-9.

15. The flocked material (2) according to claim 14, wherein said layer (22) of thermoplastic elastomer is made of a thermoplastic elastomeric material selected from the group consisting of a polyolefin matrix in which a dynamically cured elastomeric ethylene-propylene-diene monomer (EPDM) phase is closely dispersed, a styrene-butadiene-styrene (SBS) block thermoplastic elastomer, a styrene-ethylene/butylene-styrene (SEBS) copolymer, a SEBS-based copolymer and polyolefins.

16. An open linear profile (4) which is made of a flocked material (2) as claimed in any one of claims 14 and 15.

17. A closed linear profile (5) which is made of a flocked material (2) according to any one of claims 14 on 15.

18. A process for making the multi-layered film (1) according to any one of claims 1-13, comprising the steps of:
a) coextruding at least one layer (11) of thermoadhesive material, one layer (12) of a first adhesive and one layer (13) of a thermoplastic condensation polymer selected from the group consisting of polyamide, polyester and polyurethane, said thermoplastic condensation polymer having a melting point of at least 200°C;
b) subjecting the layer (13) of thermoplastic condensation polymer so coextruded to a surface activation treatment;
c) coating the thermoplastic condensation polymer activated in step b) with one layer (14) of a second adhesive;
d) coating said layer (14) of a second adhesive with one layer (15) of flock;
e) heating the film obtained from step d) to temperatures of 70 to 150°C; and
f) cooling the multi-layered film (1) heated in step e).

19. The process according to claim 18 , wherein the surface activation treatment of step b) is carried out until achieving a surface tension of at least 40 × 10⁻⁴ N/cm².

20. The process according to claim 19, wherein said surface activation treatment of step b) is a corona treatment.

21. The process according to any one of claims 18-20, wherein the layer (14) of a second adhesive of step c) is a layer made of an adhesive having a composition comprising polyurethane, dimethylformamide and a trimethylol propane/toluene diisocyanate adduct.

22. The process according to any one of claims 18-21, wherein step d) is carried out by applying a voltage of 35,000 to 60,000 Volts and a current of 0.3 to 0.5 milliamperes.

23. The process according to any one of claims 18-22, wherein step e) is carried out at temperatures of 70 to 150°C for a time of 5 to 15 minutes.

24. A process for making the flocked material (2) according to any one of claims 14-15, comprising the steps of:
i) placing into a mold (6) at least one multi-layered film (1) according to any one of claims 1-9, so that the flocked surface of said at least one film (1) faces the inner wall of the mold (6);
ii) injecting a thermoplastic elastomer into the mold (6) at temperatures of 170°C to 220°C, so that said thermoplastic elastomer flows onto the surface of the layer (11) of thermoadhesive material of the multi-layered film (1);
iii) cooling to room temperature the flocked material (2) so obtained.

25. The process according to claim 24, wherein in step ii), the injection temperature of step ii) is of 175 to 220°C for a few tenths of seconds at a pressure of 9 × 10⁷ Pa to 4 × 10⁷ Pa.

26. A process for making an open linear profile (4) according to claim 16, comprising the steps of:
A) placing at least one multi-layered film (1) having a shape of strip into a mold (6) having a housing suitable for forming a linear profile, which is at least as long as said strip, so that the flocked surface of said at least one film (1) faces the inner wall of the mold (6);
B) injecting a thermoplastic elastomer into the mold (6) at temperatures of 170°C to 220°C, so that said thermoplastic elastomer flows onto the surface of the layer (11) of thermoadhesive material of the multi-layered film (1) of the strip;
C) cooling the open linear profile (4) so obtained to room temperature.

27. A process for making a closed linear profile (5) according to claim 17, comprising the steps of:
I) providing an open linear profile (4);
II) providing a cutting (3, 3A, 3B) according to any one of claims 10-13;
III) placing the cutting (3, 3A, 3B) of step II) into a mold, so that the flocked surface of said cutting faces the inner wall of the mold (6);
IV) placing the ends of the profile (4) of step I) into the same mold (6) of step III), so that the flocked surface of said profile ends faces the inner wall of the mold (6), and so that said ends are in close proximity to the cutting (3, 3A, 3B);
V) injecting a thermoplastic elastomer into the mold (6) at temperatures of 170°C to 220°C, so that said elastomer flows onto the surface of the layer (11) of thermoadhesive material of the cutting (3, 3A, 3B), said thermoplastic elastomer at the same time contacting the ends of the profile (4) of step I);
VI) cooling the closed linear profile (5) so obtained.

28. The process according to claim 27, wherein each end of the open linear profile (4) is at a distance not higher than 0.1 mm from the cutting (3, 3A, 3B).

## Patentansprüche

1. Mehrlagige Folie (1), umfassend:
- mindestens eine Lage (11) aus heißklebendem Material,
- eine Lage (12) aus einem ersten Klebstoff,
- eine Lage (14) aus einem zweiten Klebstoff und
- eine Lage (15) aus Flock,
**dadurch gekennzeichnet, daß** zwischen der Lage (12) aus einem ersten Klebstoff und der Lage (14) aus einem zweiten Klebstoff eine Lage (13) aus einem thermoplastischen Polykondensationspolymer bereitgestellt ist, das aus der Gruppe ausgewählt ist, die aus Polyamid, Polyester und Polyurethan besteht, wobei das thermoplastische Polymer einen Schmelzpunkt von mindestens 200 °C aufweist.

2. Folie (1) nach Anspruch 1, wobei das thermoplastische Polykondensationspolymer Polyamid ist.

3. Folie (1) nach Anspruch 1 oder 2, wobei die Dicke der Lage (13) des thermoplastischen Polykondensationspolymers mindestens 10 µm beträgt.

4. Folie (1) nach einem der Ansprüche 1 bis 3, wobei der Wert des Haftvermögens der Lage (15) aus Flock an der Lage (14) aus einem zweiten Klebstoff mindestens 15 N/cm beträgt.

5. Folie (1) nach einem der Ansprüche 1 bis 4, wobei die Lage (12) aus einem ersten Klebstoff aus der Gruppe ausgewählt ist, die aus einem Polyolefin-Klebstoff und einem Polyurethan-Klebstoff besteht.

6. Folie (1) nach einem der Ansprüche 1 bis 5, wobei die Lage (15) aus Flock aus Polyester oder Polyamid hergestellt ist.

7. Folie (1) nach einem der Ansprüche 1 bis 6, wobei die Lage (11) aus heißklebendem Material aus einem heißklebendem Material hergestellt ist, das aus der Gruppe ausgewählt ist, die aus Polypropylen, Polyethylen, Polypropylen-Copolymeren, Polyethylen-Copolymeren, Ethylen-Propylen-Copolymeren, Polyurethan, Polyester und Mischungen daraus besteht.

8. Folie (1) nach einem der Ansprüche 1 bis 7, wobei die mehrlagige Folie (1) eine einzige Lage (11) aus heißklebendem Material umfaßt.

9. Folie (1) nach einem der Ansprüche 1 bis 8, wobei die mehrlagige Folie (1) streifenförmig ist.

10. Zuschnitt (3, 3A, 3B) der mehrlagigen Folie (1) nach einem der Ansprüche 1 bis 9.

11. Zuschnitt (3, 3A, 3B) nach Anspruch 10, wobei der Zuschnitt (3, 3A, 3B) V-förmig oder fünfeckig oder dreieckig oder viereckig ist.

12. Zuschnitt (3, 3A) nach Anspruch 11, wobei der Zuschnitt (3, 3A) V-förmig ist, wobei der Winkel α in der Spitze des V im Bereich von 70° bis 140° liegt und vorzugsweise 90 beträgt.

13. Zuschnitt (3, 3B) nach Anspruch 11, wobei der Zuschnitt (3, 3B) eine fünfeckige Form aufweist, wobei ein Winkel des Fünfecks mit α¹ bezeichnet wird und im Bereich von 70° bis 140° liegt und vorzugsweise 90 ° beträgt.

14. Geflocktes Material (2), eine Lage (22) aus thermoplastischem Elastomer umfassend, das mindestens teilweise mit mindestens einer mehrlagigen Folie (1) nach einem der Ansprüche 1 bis 9 beschichtet ist.

15. Geflocktes Material (2) nach Anspruch 14, wobei die Lage (22) aus thermoplastischem Elastomer aus einem thermoplastischen elastomeren Material hergestellt ist, das aus der Gruppe ausgewählt ist, die aus einer Polyolefin-Matrix, in welcher eine dynamisch gehärtete elastomere Ethylen-Propylen-Dien-Monomer-Phase (EPDM-Phase) dicht dispergiert ist, einem thermoplastischen Styrol-Butadien-Styrol-Block-Elastomer (SBS-Blockelastomer), einem Styrol-Ethylen/Butylen-StyrolCopolymer (SEBS-Copolymer), einem Copolymer auf SEBS-Basis und Polyolefinen besteht.

16. Offenes lineares Profil (4), das aus einem geflockten Material (2) nach einem der Ansprüche 14 und 15 hergestellt ist.

17. Geschlossenes lineares Profil (5) das aus einem geflockten Material (2) nach einem der Ansprüche 14 oder 15 hergestellt ist.

18. Verfahren zur Herstellung der mehrlagigen Folie (1) nach einem der Ansprüche 1 bis 13, folgende Schritte umfassend:
a) Coextrudieren mindestens einer Lage (11) aus heißklebendem Material, einer Lage (12) aus einem ersten Klebstoff und einer Lage (13) aus einem thermoplastischen Polykondensationspolymer, das aus der Gruppe ausgewählt ist, die aus Polyamid, Polyester und Polyurethan besteht, wobei das thermoplastische Polymer einen Schmelzpunkt von mindestens 200 °C aufweist,
b) Ausführen einer Oberflächenaktivierungsbehandlung an der derart coextrudierten Lage (13) aus thermoplastischem Polykondensationspolymer,
c) Beschichten des in Schritt b) aktivierten thermoplastischen Polykondensationspolymers mit einer Lage (14) aus einem zweiten Klebstoff,
d) Beschichten der Lage (14) aus einem zweiten Klebstoff mit einer Lage (15) aus Flock,
e) Erwärmen der in Schritt d) gewonnenen Folie auf Temperaturen von 70 bis 150 °C und
f) Abkühlen der in Schritt e) erwärmten mehrlagigen Folie (1).

19. Verfahren nach Anspruch 18, wobei die Oberflächenaktivierungsbehandlung von Schritt b) ausgeführt wird, bis eine Oberflächenspannung von mindestens 40 x 10⁻⁴ N/cm² erreicht ist.

20. Verfahren nach Anspruch 19, wobei die Oberflächenaktivierungsbehandlung von Schritt b) eine Coronabehandlung ist.

21. Verfahren nach einem der Ansprüche 18 bis 20, wobei die Lage (14) aus einem zweiten Klebstoff aus Schritt b) eine Lage ist, die aus einem Klebstoff mit einer Zusammensetzung hergestellt ist, die Polyurethan, Dimethylformamid und ein Trimethylolpropan-Toluoldiisocyanat-Addukt umfaßt.

22. Verfahren nach einem der Ansprüche 18 bis 21, wobei Schritt d) durch Anlegen einer Spannung von 35.000 bis 60.000 Volt und einer Stromstärke von 0,3 bis 0,5 Milliampere ausgeführt wird.

23. Verfahren nach einem der Ansprüche 18 bis 22, wobei Schritt e) bei einer Temperatur von 70 bis 150 °C über eine Dauer von 5 bis 15 Minuten ausgeführt wird.

24. Verfahren zur Herstellung des geflockten Materials (2) nach einem der Ansprüche 14 bis 15, folgende Schritte umfassend:
i) Anordnen mindestens einer mehrlagigen Folie (1) nach einem der Ansprüche 1 bis 9 in einem Formwerkzeug (6) derart, daß die geflockte Oberfläche der mindestens einen Folie (1) der Innenwand des Formwerkzeugs (6) zugewandt ist,
ii) Spritzgießen eines thermoplastischen Elastomers in das Formwerkzeug (6) bei einer Temperatur von 170 bis 220 °C derart, daß das thermoplastische Elastomer auf die Oberfläche der Lage (11) aus heißklebendem Material der mehrlagigen Folie (1) fließt,
iii) Abkühlen des so gewonnenen geflockten Materials (2) auf Raumtemperatur.

25. Verfahren nach Anspruch 24, wobei in Schritt ii) die Einspritztemperatur für einige Zehntelsekunden bei 175 bis 220 °C bei einem Druck von 9 × 10⁷ Pa bis 4 × 10⁷ Pa liegt.

26. Verfahren zur Herstellung eines offenen linearen Profils (4) nach Anspruch 16, folgende Schritte umfassend:
A) Anordnen mindestens einer mehrlagigen Folie (1) in Form eines Streifens in einem Formwerkzeug (6) mit einem Gehäuse, das zum Bilden eines linearen Profils geeignet ist und mindestens so lang ist wie der Streifen, derart, daß die geflockte Oberfläche der mindestens einen mehrlagigen Folie (1) der Innenwand des Formwerkzeugs (6) zugewandt ist,
B) Spritzgießen eines thermoplastischen Elastomers in das Formwerkzeug (6) bei einer Temperatur von 170 bis 220 °C derart, daß das thermoplastische Elastomer auf die Oberfläche der Lage (11) aus heißklebendem Material der mehrlagigen Folie (1) des Streifens fließt,
C) Abkühlen des so gewonnenen offenen linearen Profils (4) auf Raumtemperatur.

27. Verfahren zur Herstellung eines geschlossenen linearen Profils (5) nach Anspruch 17, folgende Schritte umfassend:
I) Bereitstellen eines offenen linearen Profils (4),
II) Bereitstellen eines Zuschnittes (3, 3A, 3B) nach einem der Ansprüche 10 bis 13,
III) Anordnen des Zuschnittes (3, 3A, 3B) aus Schritt II) in einem Formwerkzeug derart, daß die geflockte Oberfläche des Zuschnittes der Innenwand des Formwerkzeugs (6) zugewandt ist,
IV) Anordnen der Enden des Profils (4) aus Schritt I) in dem gleichen Formwerkzeug (6) aus Schritt III) derart, daß die geflockte Oberfläche der Profilenden der Innenwand des Formwerkzeugs (6) zugewandt sind, und derart, daß die Enden in unmittelbarer Nähe zum Zuschnitt (3, 3A, 3B) liegen.
V) Spritzgießen eines thermoplastischen Elastomers in das Formwerkzeug (6) bei einer Temperatur von 170 bis 220 °C derart, daß das thermoplastische Elastomer auf die Oberfläche der Lage (11) aus heißklebendem Material des Zuschnittes (3, 3A, 3B) fließt, wobei das thermoplastische Material zur gleichen Zeit die Enden des Profils (4) aus Schritt I) berührt,
VI) Abkühlen des so gewonnenen geschlossenen linearen Profils (5).

28. Verfahren nach Anspruch 27, wobei sich jedes Ende des offenen linearen Profils (4) in einem Abstand zum Zuschnitt (3, 3A, 3B) befindet, der nicht größer als 0,1 mm ist.

## Revendications

1. Film multicouche (1) comprenant :
- au moins une couche (11) de matériau thermoadhésif,
- une couche (12) de premier adhésif ;
- une couche (14) de second adhésif et
- une couche (15) de flocage,
**caractérisé en ce que**, entre ladite couche (12) de premier adhésif et ladite couche (14) de second adhésif, il est prévu une couche (13) de polymère de polycondensation thermoplastique sélectionnée dans le groupe composé de polyamide, polyester et polyuréthane, ledit polymère thermoplastique ayant un point de fusion d'au moins 200 °C.

2. Film (1) selon la revendication 1, dans lequel ledit polymère de polycondensation thermoplastique est du polyamide.

3. Film (1) selon la revendication 1 ou 2, dans lequel l'épaisseur de la couche (13) de polymère de polycondensation thermoplastique est d'au moins 10 µm.

4. Film (1) selon l'une quelconque des revendications 1 à 3, dans lequel la valeur d'adhérence de la couche (15) de flocage à la couche (14) de second adhésif est d'au moins 15 N/cm.

5. Film (1) selon l'une quelconque des revendications 1 à 4, dans lequel ladite couche (12) de premier adhésif est sélectionnée dans le groupe composé d'un adhésif de polyoléfine, d'un adhésif de polyuréthane.

6. Film (1) selon l'une quelconque des revendications 1 à 5, dans lequel la couche (15) de flocage est faite de polyester ou de polyamide.

7. Film (1) selon l'une quelconque des revendications 1 à 6, dans lequel ladite couche (11) de matériau thermoadhésif est faite d'un matériau thermoadhésif sélectionné dans le groupe composé de polypropylène, polyéthylène, copolymères de polypropylène, copolymères de polyéthylène, copolymères d'éthylène-propylène, polyuréthane, polyester et leurs mélanges.

8. Film (1) selon l'une quelconque des revendications 1 à 7, dans lequel le film multicouche (1) comporte une seule couche (11) de matériau thermoadhésif.

9. Film (1) selon l'une quelconque des revendications 1 à 8, dans lequel le film multicouche (1) est en forme de bande.

10. Découpe (3, 3A, 3B) du film multicouche (1) selon l'une quelconque des revendications 1 à 9.

11. Découpe (3, 3A, 3B) du film multicouche (1) selon la revendication 10, ladite découpe (3, 3A, 3B) étant en forme de « v » ou pentagonale ou triangulaire ou quadrangulaire.

12. Découpe (3, 3A) selon la revendication 11, ladite découpe (3, 3A) étant en forme de « v », l'angle a à l'apex dudit « v » se situant dans la plage de 70° à 140°, de préférence 90 °.

13. Découpe (3, 3B) selon la revendication 11, ladite découpe (3, 3B) ayant une forme pentagonale, un angle dudit pentagone étant désigné par α1 et se situant dans la plage de 70 ° à 140°, de préférence 90°.

14. Matériau floqué (2) comprenant une couche (22) d'élastomère thermoplastique au moins partiellement revêtue d'au moins un film multicouche (1) selon l'une quelconque des revendications 1 à 9.

15. Matériau floqué (2) selon la revendication 14, ladite couche (22) d'élastomère thermoplastique étant faite d'un matériau élastomérique sélectionné dans le groupe composé d'une matrice de polyoléfine dans laquelle une phase de monomère d'éthylène-propylène-diène élastomérique traité dynamiquement (EPDM) est fortement dispersée, d'un élastomère thermoplastique bloc de styrène-butadiène-styrène (SBS), d'un copolymère de styrène-éthylène/butylène-styrène (SEBS), d'un copolymère à base de SEBS et de polyoléfines.

16. Profilé linéaire ouvert (4) qui est fait d'un matériau floqué (2) selon l'une quelconque des revendications 14 et 15.

17. Profilé linéaire fermé (5) qui est fait d'un matériau floqué (2) selon l'une quelconque des revendications 14 ou 15.

18. Processus de fabrication du film multicouche (1) selon l'une quelconque des revendications 1 à 13, comprenant les étapes consistant à
a) coextruder moins une couche (11) de matériau thermoadhésif, une couche (12) de premier adhésif et une couche (13) de polymère de condensation thermoplastique sélectionné dans le groupe composé de polyamide, polyester et polyuréthane, ledit polymère de condensation thermoplastique ayant un point de fusion d'au moins 200 °C ;
b) faire subir un traitement d'activation de surface à la couche (13) de polymère de condensation thermoplastique ainsi coextrudée ;
c) revêtir le polymère de condensation thermoplastique activé dans l'étape b) d'une couche (14) de second adhésif ;
d) revêtir ladite couche (14) de second adhésif d'une couche (15) de flocage ;
e) chauffer le film obtenu dans l'étape d) à des températures de 70 à 150 °C; et
f) refroidir le film multicouche (1) chauffé dans l'étape e).

19. Procédé selon la revendication 18, dans lequel le traitement d'activation de surface de l'étape b) est réalisé jusqu'à l'obtention d'une tension surfacique d'au moins 40 × 10⁻⁴ N/cm².

20. Procédé selon la revendication 19, dans lequel ledit traitement d'activation de surface de l'étape b) est un traitement au corona.

21. Procédé selon l'une quelconque des revendications 18 à 20, dans lequel la couche (14) de second adhésif de l'étape c) est une couche faite d'un adhésif ayant une composition comprenant du polyuréthane, du diméthyleformamide et un adduit de triméthylol propane/toluène diisocyanate.

22. Procédé selon l'une quelconque des revendications 18 à 21, dans lequel l'étape d) est réalisée en appliquant une tension de 35 000 à 60 000 volts et un courant de 0,3 à 0,5 milliampères.

23. Procédé selon l'une quelconque des revendications 18 à 22, dans lequel l'étape e) est réalisée à des températures de 70 à 150° C pendant une durée de 5 à 15 minutes.

24. Procédé de fabrication du matériau floqué (2) selon l'une quelconque des revendications 14 à 15, comprenant les étapes consistant à :
i) placer dans un moule (6) au moins un film multicouche (1) selon l'une quelconque des revendications 1 à 9, de manière à ce que la surface floquée dudit au moins un film (1) soit face à la paroi interne du moule (6) ;
ii) injecter un élastomère thermoplastique dans le moule (6) à des températures de 170°C à 220 °C de manière à ce que ledit élastomère thermoplastique coule sur la surface de la couche (11) de matériau thermoadhésif du film multicouche (1) ;
iii) refroidir le matériau floqué (2) ainsi obtenu à température ambiante ;

25. Procédé selon la revendication 24, dans lequel, dans l'étape ii), la température d'injection de l'étape ii) est de 175 à 220 ° C pendant quelques dixièmes de secondes à une pression de 9 x 10⁷ Pa à 4 x 10⁷ Pa.

26. Procédé de fabrication d'un profilé linéaire ouvert (4) selon la revendication 16, comprenant les étapes consistant à :
A) placer au moins un film multicouche (1) ayant une forme de bande dans un moule (6) ayant une enceinte suffisante pour former un profilé linéaire qui est au moins aussi long que ladite bande de manière à ce que la surface floquée dudit au moins un film (1) soit face à la paroi interne du moule (6) ;
B) injecter un élastomère thermoplastique dans le moule (6) à des températures de 170°C à 220° C de manière à ce que ledit élastomère thermoplastique coule sur la surface de la couche (11) de matériau thermoadhésif du film multicouche (1) de la bande ;
C) refroidir le profilé linéaire ouvert (4) ainsi obtenu à température ambiante.

27. Procédé de fabrication d'un profilé linéaire fermé (5) selon la revendication 17, comprenant les étapes consistant à :
I) se procurer un profilé linéaire ouvert (4) ;
II) réaliser une découpe (3, 3A, 3B) selon l'une quelconque des revendications 10 à13;
III) placer la découpe (3, 3A, 3B) de l'étape II) dans un moule de manière à ce que la surface floquée de ladite découpe soit face à la paroi interne du moule (6) ;
IV) placer les extrémités du profilé (4) de l'étape I) dans le même moule (6) que celui de l'étape III) de manière à ce que la surface floquée dudit profilé soit face à la paroi interne du moule (6) et à ce que lesdites extrémités soient en proximité étroite avec la découpe (3, 3A, 3B) ;
V) injecter un élastomère thermoplastique dans le moule (6) à des températures de 170° C à 220° C de manière à ce que ledit élastomère coule sur la surface de la couche (11) de matériau thermoadhésif de la découpe (3, 3A, 3B), ledit élastomère thermoplastique touchant en même temps les extrémités du profilé (4) de l'étape I) ;
VI) refroidir le profilé linéaire fermé (5) ainsi obtenu.

28. Procédé selon la revendication 27, dans lequel chaque extrémité du profilé linéaire (4) est à une distance ne dépassant pas 0,1 mm de la découpe (3, 3A, 3B).
